# FASCICULE DE BREVET EUROPEEN

(11) **EP 0 344 077 B1**
(45) Date de publication et mention de la délivrance du brevet: **07.01.1993**
(21) Numéro de dépôt: 89420182.1
(22) Date de dépôt: 26.05.1989
(51) Int. Cl.: B23C 3/05

(54) **Machine d'usinage de précision avec tige pour la détermination de l'axe moyen pratique d'un trou de profil général cylindrique**
Präzisionsbearbeitungsmaschine mit einer Stange zum Bestimmen der Mittelwertachse eines zylindrischen Loches
Precision machine with a rod to determine the average axis of a cylindrical hole

(30) Priorité: 27.05.1988 FR 8807315
(43) Date de publication de la demande: 29.11.1989
(73) Titulaire: SERDI - SOCIETE D'ETUDES DE REALISATION ET DE DIFFUSION INDUSTRIELLES, Annecy (FR)
(72) Inventeur: Harmand, Pierre, F-74000 Annecy (FR)
(74) Mandataire: Guerre, Dominique

(56) Documents cités:
- DE-C- 903 762
- FR-A- 1 070 485
- FR-A- 1 080 137
- FR-A- 1 108 959
- FR-A- 1 555 211
- US-A- 2 200 758
- US-A- 3 556 042

## Description

La présente invention concerne à titre principal selon le préambule de la revendication 1 une tige pour la détermination de l'axe moyen pratique d'un trou présentant un profil général cylindrique, mais des imperfections locales de concentricité de l'ordre des tolérances usuelles d'usinage, par exemple de l'ordre de quelques microns, ou moins. Une telle tige peut faire partie d'une machine telle que précédemment définie, de manière fixe ou amovible, notamment à titre de tige pilote. Une telle tige peut aussi être utilisée pour la détermination physique ou matérialisation de l'axe moyen pratique d'un trou cylindrique, l'axe ainsi matérialisé pouvant servir à différentes fins, telles que métrologie, rotation d'un outil de coupe. Cette même tige peut servir d'intermédiaire de mesure, et faire partie d'un système ou équipement d'usinage, comportant un outil positionné par rapport à la pièce à usiner, grâce à la mesure de position de la tige.

L'invention concerne également selon le préambule de la revendication 5, à titre secondaire, et de manière indépendante, une machine d'usinage de précision, avec tige pour la détermination de l'axe moyen pratique d'un trou de profil général cylindrique. Par "machine", on entend tout équipement lourd de type industriel, tel que machine-outil, mais aussi tout équipement léger de type manuel, tel qu'outillage.

Par usinage de précision, on entend tout travail d'une pièce métallique avec un outil de coupe, qu'il s'agisse d'un alésage, fraisage, taraudage, d'une rectification, ou de toute autre forme de travail des métaux, par enlèvement d'un copeau, ou qu'il s'agisse d'un outil d'abrasion, par enlèvement de particules métalliques.

La présente invention est présentée, décrite et définie par référence à la rectification des sièges de soupapes de moteurs thermiques, mais il doit être entendu que son interprétation et sa portée ne sauraient être limitées à ce domaine d'application, puisque, comme l'indique le terme "usinage de précision", l'invention s'applique à d'autres formes de travail des métaux.

Notamment dans le domaine de la rectification des sièges de soupage, selon le brevet EP-B-0022796, on a décrit et proposé une machine d'usinage de précision comportant :
- un support plan et horizontal, fixe ;
- une tête d'usinage, disposée sur coussin d'air par rapport au support plan, et déplaçable sur ce dernier selon deux directions perpendiculaires ;
- un fourreau pourvu d'une noix sphérique d'orientation, monté à l'intérieur de la tête d'usinage ;
- deux sièges de sphéricité concave complémentaire à la noix sphérique, l'un fixe et formé par la paroi de la tête d'usinage, et l'autre mobile par rapport à la même paroi, mais disposé à l'intérieur de la tête, et susceptible de bloquer le fourreau en orientation ;
- des moyens pneumatiques permettant de sustenter la noix sphérique sur coussin d'air, pendant la phase de déblocage du siège mobile ;
- une broche mobile en rotation autour de son axe, et en translation selon son axe, coulissant dans le fourreau ;
- un outil d'usinage en rotation, monté à l'extrémité libre de la broche, éventuellement par l'intermédiaire d'un dispositif porte-outil ;
- une tige pilote coaxiale à l'axe de la broche, prolongeant cette dernière à son extrémité libre ;
- un moyen d'entrainement en rotation de la broche, solidaire du fourreau.

Une telle machine a démontré toute son efficacité dans la rectification de sièges de soupapes, en particulier en ce qui concerne la concentricité et du guide de tige de soupape et du siège de soupape. Ceci résulte du fait que, pendant la sustentation du fourreau sur coussin d'air, et avant le blocage de ce dernier et l'action de l'outil de coupe, il est possible de positionner la broche exactement dans l'axe pratique du guide de soupape, avec la tige pilote engagée dans ce dernier. Ce positionnement résulte lui-même de la quasi-absence de résistance par frottement de l'équipage constitué par le fourreau, la broche porte-outil et le moyen d'entrainement en rotation, par rapport à la tête d'usinage, pendant la phase de déblocage du siège mobile, et sustentation du fourreau.

Après blocage du fourreau dans sa position d'équilibre, pendant l'usinage ou rectification, la tige pilote, choisie et adaptée aux caractéristiques dimensionnelles du guide de soupape, tourne à l'intérieur de ce dernier, et l'outil de coupe travaille de manière concentrique à ce même guide.

Ceci étant, la détermination de l'axe moyen pratique du guide de soupape, grâce à la tige pilote, demeure limitée par les défauts ou imperfections locaux de concentricité du trou cylindrique de référence que constitue ce même guide. De tels défauts, de l'ordre des tolérances usuelles d'usinage, par exemple de quelques microns ou moins, résultent ausi bien des limites ou imperfections de l'usinage d'origine, que de l'usure différenciée selon l'axe du guide de soupape.

Même en utilisant une tige pilote de section circulaire très proche de la section moyenne du guide de soupape, il demeure nécessairement un interstice fonctionnel entre la surface interne du guide et la tige.

Pour ces deux raisons, la détermination de l'axe moyen pratique du guide de soupape comporte encore des limites, même si ces dernières sont de l'ordre de quelques microns. Or, dans le domaine des moteurs thermiques, il apparaît de plus en plus important, dans une opération de rectification ou finition d'un siège, d'approcher l'axe pratique d'équilibre de la tige de soupape en mouvement, correspondant à l'axe moyen du guide de soupape. Ceci conditionne en particulier, en fonctionnement, la bonne étanchéité entre la tête de la soupape et son siège, mais aussi l'efficacité du transfert thermique vers la culasse.

La présente invention a donc pour objet d'améliorer la détermination de l'axe moyen pratique d'un trou de référence, d'allure générale cylindrique, en tenant compte des imperfections locales selon l'axe du trou, aussi minimes soient elles, et ceci en conservant le principe même d'une tige pilote adaptée étroitement à la section moyenne du même trou.

Selon l'invention comme définit dans les revendications 1 et 5, et de manière générale, on rapporte sur la surface cylindrique rigide de la tige pilote un palier élastique coaxial d'extension axiale et d'extension circulaire continue autour de la tige. La surface externe hors contrainte du palier élastique, c'est-à-dire lorsque la tige pilote n'est pas introduite dans le trou de référence, émerge au moins localement au-dessus de la surface cylindrique de la tige pilote. Ce palier élastique est susceptible d'établir sous contrainte, par compression élastique radiale et locale, une pluralité, voire une infinité, de zones annulaires de contact périphérique continu, entre la surface locale du trou de référence et le palier élastique. Et ces zones annulaires de contact, compensant les imperfections locales du trou de référence, sont également échelonnées selon l'axe de la tige pilote.

Selon un mode préféré d'exécution, mais non exclusif, le palier élastique coaxial comporte une pluralité de bagues élastiques, échelonnées selon l'axe de la tige pilote, déformables élastiquement dans la direction radiale, et dont la surface externe hors contrainte émerge au-dessus de la surface cylindrique apparente de la tige. La compression élastique radiale de ces bagues, sous contrainte, permet d'établir une série de contacts annulaires entre la surface locale du trou de référence et la tige pilote, échelonnés selon l'axe de cette dernière.

Selon l'invention, chacune des zones annulaires de contact du palier élastique, avec la surface locale du trou de référence, transmet une contrainte à la tige rigide, dont la valeur dépend de celle de l'imperfection locale, en creux, en saillie, ou inexistante. Toutes ces contraintes échelonnées selon l'axe de la tige rigide (par exemple en carbure de tungstène), s'équilibrent entre elles pour déterminer une position moyenne de la tige, pouvant être retenue comme axe moyen pratique du trou de référence. En d'autres termes, la tige pilote selon l'invention permet de moyenner les imperfections du trou de référence.

La solution selon l'invention apporte en outre les avantages complémentaires suivants.

La portée élastique de la tige pilote, au contact du trou de référence, permet de rigidifier la coaxialité de la tige pilote avec l'axe moyen pratique touvé , aussi bien au plan statique, au moment du centrage dans le trou de référence, qu'au plan dynamique, lorsque l'outil de coupe travaille en rotation.

En particulier, lors du travail en rotation de l'outil de coupe, l'ensemble en rotation constitué par la broche et la tige pilote coaxiale se trouve soutenu en rotation, de part et d'autre de l'outil de coupe, par deux véritables coussinets, le premier constitué par le fourreau présent dans la tête d'usinage, et le second par la portée élastique de la tige, au contact local du trou de référence. On aboutit ainsi à une véritable rigidification coaxiale du pilote et de la broche, par rapport au trou de référence, quelles que soient les imperfections de ce dernier.

Le caractère déformable et élastique de la portée élastique permet d'amortir les vibrations dont la broche et la tige pilote peuvent être le siège.

Le maintien annulaire de la tige pilote, en plusieurs endroits étagés selon l'axe de cette dernière, permet de compenser l'effort exercé horizontalement par l'outil de coupe, à l'extrémité supérieure de la tige pilote.

Le positionnement axial de la tige pilote dans le trou de référence devient beaucoup plus rapide, voire instantané.

La présente invention est maintenant décrite par référence aux dessins annexés, dans lesquels :
- la figure 1 représente une vue en coupe axiale d'une machine de rectification conforme à l'invention, au cours du travail d'usinage d'un siège de soupape d'un moteur thermique
- la figure 2 représente une vue en coupe axiale, à échelle agrandie, d'une tige pilote conforme à l'invention ;
- la figure 3 représente une vue à l'échelle encore agrandie du détail A de la figure 2
- a figure 4 représente le mode d'équilibrage d'une tige selon l'invention, à l'intérieur d'un trou cylindrique
- les figures 5 et 6 représentent deux modes d'exécution différents de l'invention
- les figures 7 et 8 représentent deux utilisations différentes d'une tige selon l'invention
- la figure 9 représente de manière schématique une autre machine d'usinage selon l'invention, dans laquelle la tige selon l'invention sert uniquement d'intermédiaire de détermination de l'axe pratique du guide de la tige de soupape

Pour l'essentiel, une machine de rectification conforme à l'invention reprend les différentes caractéristiques techniques déjà décrites dans le brevet EP-B-0022796. On se référera utilement au texte de ce brevet, pour les détails de construction.

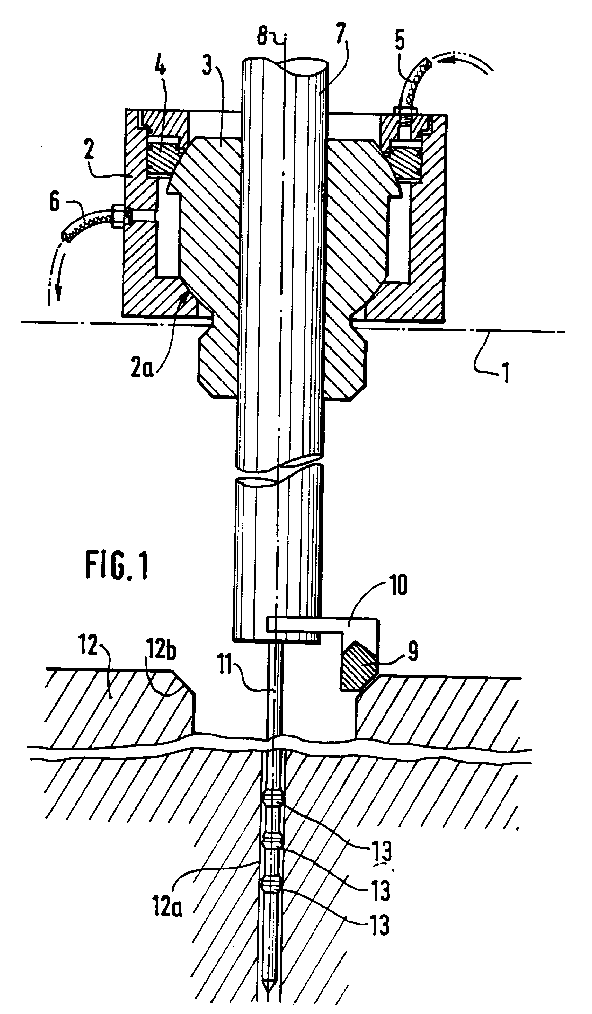

Une telle machine comprend :
- un support fixe, plan et horizontal, non représenté, mais correspondant à la ligne horizontale en traits discontinus selon la référence numérique (1) de la figure 1 ;
- une tête d'usinage 2, correspondant à une boite cylindrique substantiellement fermée, disposée sur coussin d'air par rapport à la table fixe (1), et déplaçable sur cette dernière selon deux directions de référence perpendiculaires ;
- un fourreau (3), correspondant à une noix sphérique d'orientation, monté à l'intérieur de la tête (2) ;
- deux sièges de sphéricité concave, complémentaires à la noix sphérique (3), l'un fixe (2a), formé sur la paroi inférieure de la tête ou boîte (2), et l'autre mobile(4), par rapport à la même paroi, mais disposé à l'intérieur de la tête (2) ; ce siège mobile (4) est susceptible de bloquer le fourreau (3) en orientation, grâce à un déplacement en sens vertical vers le bas, selon l'axe de la boîte (2), commandé par une source d'air comprimé (5) ;
- des moyens pneumatiques (6), en communication avec l'interstice entre la paroi du boitier (2) et le fourreau (3), permettant de sustenter la noix sphérique (3) sur coussin d'air, pendant la phase de déblocage du siège mobile (4) ;
- une broche (7) mobile en rotation autour de son axe (8), et en translation selon le même axe, coulissant dans le fourreau (3) ;
- un outil de coupe (9), découpant un copeau par rotation de la broche (7), monté à l'extrémité libre de cette dernière, par l'intermédiaire d'un dispositif (10), porte-outil ;
- une tige pilote (11), coaxiale à l'axe de la broche (7), et par conséquent disposée selon l'axe (8), prolongeant ladite broche à son extrémité libre ;
- un moyen d'entrainement en rotation de la broche (7), non représenté, et solidaire du fourreau (3).

Le fonctionnement d'une telle machine peut être rappelé de la manière suivante :
- par les moyens pneumatiques (5) on soulève et débloque le siège mobile (4), et par les moyens pneumatiques (6), on injecte de l'air comprimé dans l'interstice situé entre le fourreau (3) et la paroi de la boîte cylindrique (2) ; dès cet instant, le fourreau (3) et la broche (7) se trouvent sustentés sur un coussin d'air, sans frottement par rapport à la boîte (2) ;
- grâce à la tige pilote (11), il est alors possible de positionner la broche (7) selon l'axe moyen pratique du trou cylindrique de référence (12a), ou guide de soupape, appartenant à un moteur thermique (12), ce qui veut dire que le guide de soupape (12a), la tige pilote (11) et la broche (7) sont dès ce moment disposés selon l'axe (8) ;
- puis, toujours par l'action des moyens pneumatiques (5), on descend le siège mobile (4), lequel bloque dans la position précitée le fourreau (3) ;
- il est alors possible de commencer la rectification du siège (12b) de soupape, par action en rotation de l'outil de coupe (9), grâce au mouvement correspondant de la broche (7).

Par "axe moyen pratique", on entend pour une soupape de moteur thermique la position prise en fonctionnement par la tige de soupape ; il s'agit donc d'une position d'équilibre dynamique, intégrant les irrégularités locales du guide de soupape.

Conformément à l'invention, la tige pilote (11) comporte une pluralité de logements (11a) annulaires, en creux par rapport à la surface cylindrique de la tige (11), et échelonnés selon l'axe et la hauteur de cette dernière. Plusieurs bagues élastiques (13), déformables élastiquement dans la direction radiale, sont montées dans les logements annulaires (11a) ainsi définis. Par conséquent, la forme et les dimensions transversales de chaque bague (13) tiennent compte et sont adaptées à celle de chaque logement (11a).

L'ensemble de ces bagues (13) forme un palier élastique (20) d'extension axiale, rapporté par conséquent sur la tige (11). Le profil extérieur général d'un tel palier, hors contrainte, émerge au-dessus de la surface cylindrique de la tige (11), par les arrêtes locales (13a) des bagues (13).

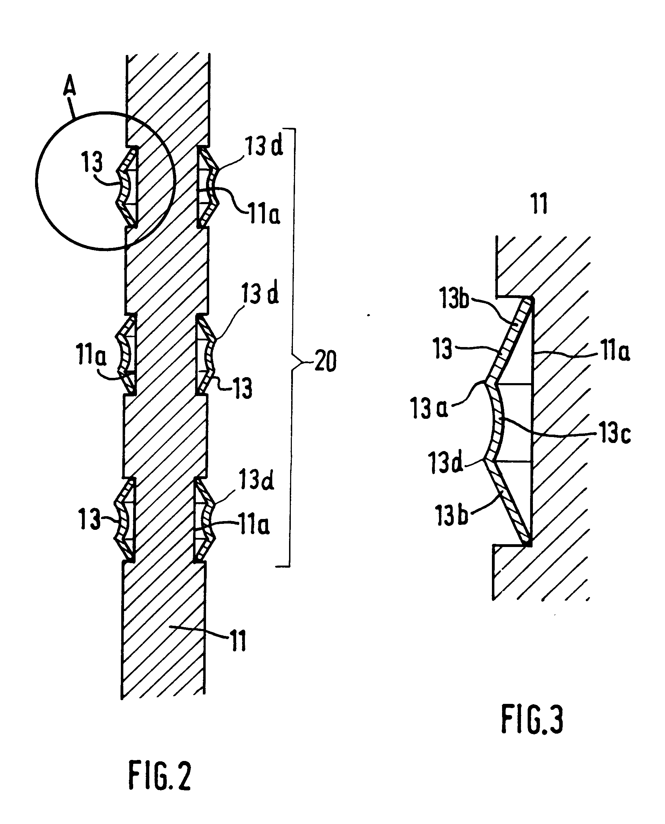

Comme le montre la figure 3, la surface extérieure (13a) de chaque bague (13a), hors contrainte, émerge au-dessus de la surface cylindrique de la tige (11). Et comme le montre la partie inférieure de la figure 1, la compression élastique radiale sous contrainte de chaque bague (13) permet d'établir un contact périphérique entre la surface du trou de référence (12a), en l'occurence le guide de soupape, et la surface de la tige (11).

Comme le montre la figure 3, en profil transversal, chaque bague comporte deux ailes (13b) formant entre elles un angle obtus dirigé de l'intérieur vers l'extérieur du logement annulaire (11a). Ces deux ailes (13b) sont séparées par une partie centrale (13c) concave, vue de l'extérieur de la bague.

Les bagues (13) sont réalisées par moulage ou extrusion de toute matière plastique, composite ou non, présentant à la fois un faible coefficient de frottement et une bonne résistance à l'usure en rotation ; il peut s'agir par exemple de polytétrafluorétylène.

Les bagues (13) peuvent être réalisées selon tous modes d'exécution différents de ceux décrits par référence aux figures 2 et 3 ; les bagues peuvent être pleines, et non creuses, et avoir une section transversale et radiale de forme ou profil différent.

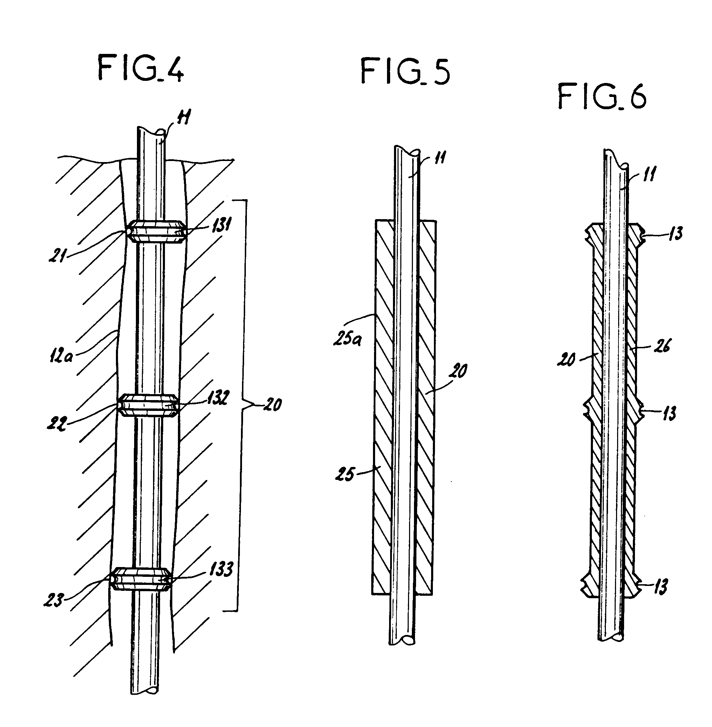

Comme le montre la figure 4, et en exagérant les dimensions concernées, le trou de référence (12a) présente effectivement un profil général cylindrique, mais comporte de manière échelonnée selon son axe, différents défauts locaux de concentricité. Les bagues étagées 131, 132 et 133, appartenant au palier élastique (20) selon l'invention, permettent d'établir, sous contrainte, par compression élastique radiale de chacune, une pluralité de zones annulaires (21, 22 et 23) de contact entre la surface locale du trou de référence (12a) et la tige pilote (11) ; ces zones annulaires de contact sont échelonnées selon l'axe de la tige (11). Les contraintes exercées sur la tige rigide (11), au niveau des différentes zones annulaires de contact précitées, à savoir vers la droite pour la zone 21, nulle pour la zone 22 et vers la gauche (selon la figure 4) pour la zone 23, s'équilibrent par l'intermédiaire de la tige (11), de telle sorte que cette dernière prend une position moyenne représentative de l'axe moyen pratique du guide (12a) de soupape.

Conformément à la figure 5, le palier élastique (20) est un manchon élastique (25) continu selon l'axe de la tige pilote (11), dont la surface extérieure (25a) émerge au-dessus de la surface cylindrique résiduelle de la tige (11).

Conformément à la figure 6, le palier élastique (20) comporte une embase annulaire (26), continue selon l'axe de la tige pilote (11), de laquelle saillisent de manière monobloc les différentes bagues élastiques (13).

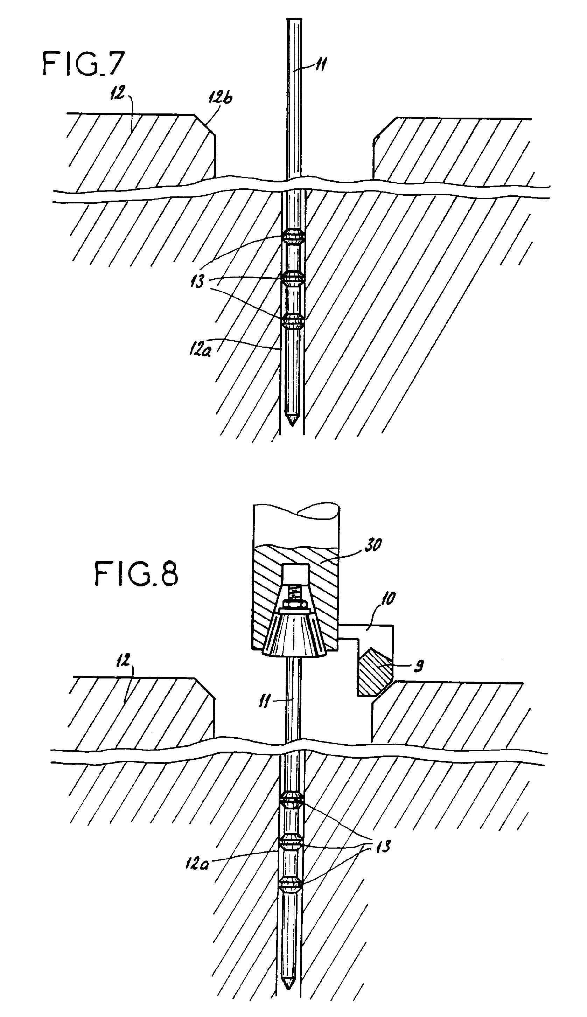

Conformément à la figure 7, la tige (11) selon l'invention décrite précédemment peut être utilisée en tant que telle pour déterminer l'axe moyen pratique du trou de référence (12a). Cette détermination physique ou matérialisation peut être utilisée à différentes fins, par exemple de métrologie ou mesure, les valeurs ainsi obtenues pouvant être mises en oeuvre pour le positionnement d'un outil par exemple.

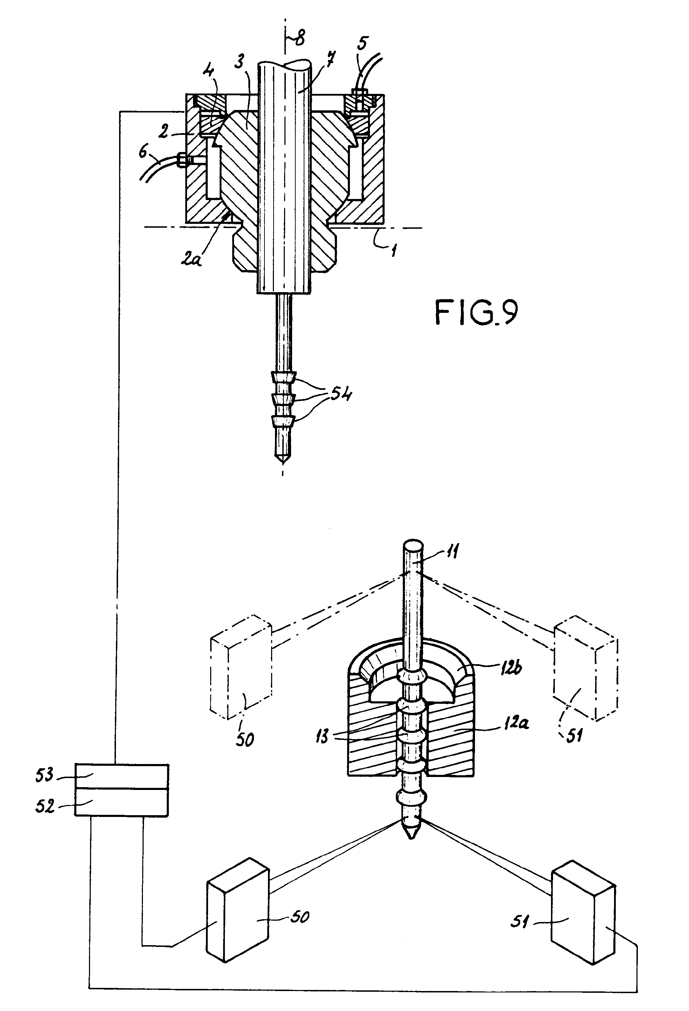

S'agissant du positionnement d'un outil, on a représenté à la figure 9 une autre machine d'usinage selon l'invention, associant une tige (11) identique à celle utilisée précédemment, mais totalement distincte de la tête d'usinage (2). Une telle machine comporte :
- des moyens de mesure de la position d'équilibre prise dans l'espace par la tige (11) ; ces moyens comprennent par exemple deux palpeurs (50) et (51), avec ou sans contact avec la tige (11), disposés à 90° l'un de l'autre ; ces palpeurs sont déplaçables en hauteur, d'une position basse mesurant la position de l'extrémité basse de la tige (11), à une position haute mesurant la position de l'extrémité haute de la tige (11) ; les positions mesurées pour les deux extrémités de la tige sont envoyées dans une unité de traitement (52) des mesures
- des moyens de commande (53) en déplacement de la tête d'usinage (2) et/ou de la broche (7), pour positionner cette dernière selon la position mesurée de la tige (11), disponible dans l'unité (52).

Par extraction de la tige (11), de manière manuelle et automatique, le trou de référence (12a) devient disponible pour un usinage, par exemple avec un outil de surfaçage (54), effectué exactement selon l'axe pratique du guide (12a) de soupape.

Conformément à la figure 8, à l'inverse du mode de fonctionnement décrit par référence aux figures 1 et 2, pendant la phase d'usinage, la tige (11) demeure immobile en rotation, et une tête (30) est rapportée sur l'extrémité libre de la tige (11), tout en étant mobile en rotation par rapport à cette dernière ; des moyens moteurs non représentés, qu'il s'agisse de moyens manuels ou d'un moteur électrique, entrainent la tête d'usinage (30) par rapport à la tige (11).

Bien entendu, sur les figures 1 à 9, la section transversale du palier élastique (20) a été exagérée, de manière à mieux faire comprendre l'invention.

## Revendications

1. Tige pour la détermination de l'axe moyen pratique d'un trou (12a), par exemple le guide de soupape dont on veut rectifier le siège (12b), ce trou présentant un profil général cylindrique, mais des imperfections locales, par exemple de concentricité, de l'ordre des tolérances usuelles d'usinage, échelonnées selon son axe, ladite tige présentant une surface cylindrique rigide selon sa longueur, caractérisée en ce qu'est rapporté sur la surface cylindrique rigide de ladite tige pilote un palier élastique coaxial (20) d'extension axiale, et d'extension circulaire continue autour de ladite tige, dont la surface externe hors contrainte émerge au moins localement au-dessus de ladite surface cylindrique de la tige pilote, ce palier étant susceptible d'établir sous contrainte, par compression élastique radiale et susceptible d'établir sous contrainte, par compression élastique radiale et locale, une pluralité de zones annulaires de contact périphérique continu entre la surface locale du trou et ledit palier élastique, compensant les imperfections locales du trou, ces zones annulaires de contact étant également échelonnées selon l'axe de la tige pilote.

2. Tige selon la revendication 1, caractérisée en ce que le palier élastique (20) coaxial est un manchon élastique continu selon l'axe de la tige pilote, dont la surface externe cylindrique hors contrainte émerge au-dessus de la surface cylindrique apparente de ladite tige.

3. Tige selon la revendication 1, caractérisée en ce que le palier élastique (20) coaxial comporte une pluralité de bagues élastiques (13), échelonnées selon l'axe (8) de la tige pilote, déformables élastiquement dans la direction radiale, et dont la surface externe (13a) hors contrainte émerge au-dessus de la surface cylindrique apparente de la tige (11).

4. Machine d'usinage de précision, par exemple pour la rectification de sièges (12b) de soupapes de moteurs thermiques, comportant une tête d'usinage (2) avec une broche (7) solidaire en rotation d'un outil d'usinage (54), associant une tige (11) amovible selon l'une quelconque des revendications 1 à 3, caractérisée en ce qu'elle comporte des moyens de mesure (50,51,52) de la position de la tige (11), introduite dans le trou (12a) de référence, et des moyens (53) de commande en déplacement de la tête d'usinage (2) et/ou de la broche (7), pour positionner cette dernière selon la position mesurée de tige, cette dernière étant extraite du trou (12a) de référence.

5. Machine d'usinage de précision, par exemple pour la rectification de sièges (12b) de soupapes de moteurs thermiques, comportant une broche (7) mobile en rotation autour de son axe (8), et en translation selon son axe (8), laquelle est solidaire en rotation d'un outil d'usinage (9), et est prolongée à son extrémité libre par une tige pilote (11), coaxiale à l'axe de ladite broche, présentant une surface cylindrique rigide selon sa longueur, et destinée à être introduite dans un trou (12a) de référence, par exemple le guide de soupape dont on veut rectifier le siège (12b), ce trou présentant un profil général cylindrique, mais des imperfections locales, par exemple de concentricité, de l'ordre des tolérances usuelles d'usinage, échelonnées selon son axe, **caractérisée en ce qu'**est rapporté sur la surface cylindrique rigide la tige pilote, un palier élastique coaxial (20) d'extension axiale, et d'extension circulaire continue autour de ladite tige, dont la surface externe hors contrainte émerge au moins localement au-dessus de ladite surface cylindrique de la tige pilote, ce palier étant susceptible d'établir sous contrainte, par compression élastique radiale et locale, une pluralité de zones annulaires de contact périphérique continu entre la surface locale du trou de référence et ledit palier élastique, compensant les imperfections locales du trou, ces zones annulaires de contact étant également échelonnées selon l'axe de la tige pilote.

6. Machine selon la revendication 5, caractérisée en ce que le palier élastique (20) coaxial est un manchon élastique continu selon l'axe de la tige pilote, dont la surface externe cylindrique hors contrainte émerge au-dessus de la surface cylindrique apparente de ladite tige.

7. Machine selon la revendication 5, caractérisée en ce que le palier élastique coaxial (20) comporte une pluralité de bagues élastiques (13) échelonnées selon l'axe (8) de la tige pilote, déformables élastiquement dans la direction radiale, et dont la surface externe (13a) hors contrainte émerge au-dessus de la surface cylindrique apparente de la tige (11).

8. Machine selon la revendication 7, caractérisée en ce que la tige pilote (11) comporte une pluralité de logements annulaires (11a), échelonnés selon l'axe (8) de la tige pilote, en creux par rapport à la surface cylindrique de cette dernière, et recevant la pluralité de bagues élastiques (13) respectivement.

9. Machine selon la revendication 7, caractérisée en ce que le palier élastique coaxial (20) comporte une embase annulaire, continue selon l'axe (8) de la tige pilote (11), de laquelle saillissent de manière monobloc les bagues élastiques ( 13).

10. Machine selon la revendication 7, caractérisée en ce qu'en profil transversal, une bague élastique (13) comporte deux ailes (13b) formant entre elles un angle obtus.

11. Machine selon la revendication 10, caractérisée en ce qu'en profil transversal, les deux ailes (13b) de la bague sont séparées par une partie centrale (13c) concave.

## Claims

1. Rod for the determination of the practical mean axis of a hole (12a) for example the value guide, of which it is desired to grind the seating (12b), this hole exhibiting a cylindrical general contour, but local imperfections, for example of concentricity of the order of the customary machining tolerances, staggered along its axis, the said rod exhibiting a rigid cylindrical surface along its length, characterised in that there is attached to the rigid cylindrical surface of the said pilot rod a coaxial resilient bearing (20) of axial extension, and of continuous circular extension about the said rod, the unstressed external surface of which emerges at least locally above the said cylindrical surface of the pilot rod, this bearing being capable of establishing under stress, by radial and local resilient compression, a plurality of annular zones of continuous peripheral contact, between the local surface of the hole and the said resilient bearing, compensating for the local imperfections of the hole, these annular contact zones also being staggered along the axis of the pilot rod.

2. Rod according to Claim 1, characterised in that the coaxial resilient bearing (20) is a resilient sleeve which is continuous along the axis of the pilot rod, the unstressed cylindrical external surface of which emerges above the visible cylindrical surface of the said rod.

3. Rod according to Claim 1, characterised in that the coaxial resilient bearing (20) comprises a plurality of resilient rings (13), staggered along the axis (8) of the pilot rod, which are resiliently deformable in the radial direction, and the unstressed external surface (13a) of which emerges above the visible cylindrical surface of the rod (11).

4. Machine for precision machining, for example for the grinding of valve seatings (12b) of heat engines, comprising a machining head (2) with a pin (7) integral, in terms of rotation, with a machining tool (54), associating a removable rod (11) according to any one of Claims 1 to 3, characterised in that it comprises means (50, 51, 52) for measuring the position of the rod (11), introduced into the reference hole (12a), and means (53) for controlling the displacement of the machining head (2) and/or of the pin (7), to position the latter along the measured position of the rod, the latter being extracted from the reference hole (12a).

5. Machine for precision machining, for example for the grinding of valve seatings (12b) of heat engines, comprising a pin (7) which is movable in rotation about its axis (8), and in translation along its axis (8), which is integral, in terms of rotation, with a machining tool (9), and is extended at its free end by a pilot rod (11), coaxial with the axis of the said pin, exhibiting a rigid cylindrical surface along its length, and intended to be introduced into a reference hole (12a), for example the valve guide, of which it is desired to grind the seating (12b), this hole exhibiting a cylindrical general contour, but local imperfections, for example of concentricity, of the order of the customary machining tolerances, staggered along its axis, characterised in that there is attached to the rigid cylindrical surface (sic) the pilot rod a coaxial resilient bearing (20) of axial extension, and of continuous circular extension about the said rod, the unstressed external surface of which emerges at least locally above the said cylindrical surface of the pilot rod, this bearing being capable of establishing under stress, by radial and local resilient compression, a plurality of annular zones of continuous peripheral contact, between the local surface of the reference hole and the said resilient bearing, compensating for the local imperfections of the hole, these annular contact zones also being staggered along the axis of the pilot rod.

6. Machine according to Claim 5, characterised in that the coaxial resilient bearing (20) is a resilient sleeve which is continuous along the axis of the pilot rod, the unstressed cylindrical external surface of which emerges above the visible cylindrical surface of the said rod.

7. Machine according to Claim 5, characterised in that the coaxial resilient bearing (20) comprises a plurality of resilient rings (13) staggered along the axis (8) of the pilot rod, which are resiliently deformable in the radial direction, and the unstressed external surface (13a) of which emerges above the visible cylindrical surface of the rod (11).

8. Machine according to Claim 7, characterised in that the pilot rod (11) comprises a plurality of annular recesses (11a), staggered along the axis (8) of the pilot rod, hollowed out in relation to the cylindrical surface of the latter, and receiving the plurality of resilient rings (13) respectively.

9. Machine according to Claim 7, characterised in that the coaxial resilient bearing (20) comprises an annular base, which is continuous along the axis (8) of the pilot rod (11), from which the resilient rings (13) project integrally.

10. Machine according to Claim 7, characterised in that, transverse profile, a resilient ring (13) comprises two wings (13b) forming between them an obtuse angle.

11. Machine according to Claim 10, characterised in that, in transverse profile, the two wings (13b) of the ring are separated by a concave central part (13c).

## Patentansprüche

1. Stange zur Bestimmung der tatsächlichen Mittelachse einer Bohrung (12a), zum Beispiel einer Ventilführung, deren Sitz (12b) man schleifen will, wobei diese Bohrung ein im wesentlichen zylindrisches Profil mit längs ihrer Achse gestaffelten lokalen Fehlern, beispielsweise in der Konzentrizität, im Bereich üblicher Bearbeitungstoleranzen aufweist und wobei die Stange eine längs ihrer Länge feste zylindrische Oberfläche aufweist, dadurch gekennzeichnet, daß auf der festen zylindrischen Oberfläche der Führungsstange ein koaxiales, elastisches Lager (20) mit axialer Ausdehnung und durchgehender runder Ausdehnung um die Stange herum angebracht ist, dessen Außenfläche ohne Druck wenigstens lokal über die zylindrische Oberfläche der Führungsstange hervorragt, wobei dieses Lager dazu geeignet ist, unter Druckbelastung durch lokale und radiale elastische Komprimierung eine Vielzahl von ringförmigen Zonen mit durchgehendem äußeren Kontakt zwischen der lokalen Oberfläche der Bohrung und dem elastischen Lager aufzubauen und die lokalen Fehler der Bohrung zu kompensieren, wobei die ringförmigen Kontaktzonen gleichfalls längs der Achse der Führungsstange gestaffelt sind.

2. Stange nach Anspruch 1, dadurch gekennzeichnet, daß das koaxiale elastische Lager (20) eine längs der Achse der Führungsstange durchgehende elastische Muffe ist, deren zylindrische Außenfläche ohne Druckbelastung über die zu der Stange gehörende zylindrische Oberfläche hervorragt.

3. Stange nach Anspruch 1, dadurch gekennzeichnet, daß das koaxiale elastische Lager (20) eine Vielzahl von längs der Achse (8) der Führungsstange gestaffelten, in radialer Richtung elastisch verformbaren elastischen Ringen (13) umfaßt, deren Außenfläche (13a) ohen Druckbelastung über die zu der Stange (11) gehörende zylindrische Oberfläche hervorragt.

4. Machine zur Präzisionsbearbeitung, beispielsweise zum Schleifen von Ventilsitzen (12b) von Verbrennungsmotoren, enthaltend einen Bearbeitungskopf (2) mit einer drehfest mit einem Bearbeitungswerkzeug (54) verbundenen Welle (7), wobei eine lösbare Stange nach einem der Ansprüche 1 bis 3 zugeordnet ist, dadurch gekennzeichnet, daß sie Mittel (50, 51, 52) zum Messen der Position der in die Referenzbohrung (12a) eingeführten Stange (11) und Steuermittel (53) für die Verschiebung des Bearbeitungskopfes (2) und/oder der Welle (7) umfaßt, um die letztere entsprechend der gemessenen Position der Stange zu positionieren, während die letztere aus der Referenzbohrung (12a) herausgezogen ist.

5. Machine zur Präzisionsbearbeitung, beispielsweise zum Schleifen von Ventilsitzen (12b) von Verbrennungsmotoren, enthaltend eine um seine Achse (8) drehbare und längs seiner Achse (8) in Translationsrichtung bewegbare Welle (7), welche drehfest mit einem Bearbeitungswerkzeug (9) verbunden und an ihrem freien Ende durch eine zu der Achse der Welle koaxiale Führungsstange (11) verlängert ist, die längs ihrer Länge eine feste zylindrische Oberfläche aufweist, und dazu vorgesehen ist, in eine Referenzbohrung (12a), beispielsweise die Ventilführung, deren Sitz (12b) man schliefen will, eingeführt zu werden, wobei diese Bohrung ein im wesentlichen zylindrisches Profil mit längs ihrer Achse gestaffelten lokalen Fehlern, beispielsweise in der Konzentrizität, im Bereich üblicher Bearbeitungstoleranzen aufweist, dadurch gekennzeichnet, daß auf der festen zylindrischen Oberfläche der Führungsstange ein koaxiales, elastisches Lager (20) mit axialer Ausdehnung und durchgehender runder Ausdehnung um die Stange herum angebracht ist, dessen Außenfläche ohen Druckbelastung wenigstens lokal über die zylindrische Oberfläche der Führungsstange hervorragt, wobei dieses Lager dazu geeignet ist, unter Druck durch lokale und radiale elastische Komprimierung eine Vielzahl von ringförmigen Zonen mit durchgehendem äußeren Kontakt zwischen der lokalen Oberfläche der Referenzbohrung und dem elastischen Lager aufzubauen und die lokalen Fehler der Bohrung zu kompensieren, wobei die ringförmigen Kontaktzonen gleichfalls längs der Achse der Führungsstange gestaffelt sind.

6. Maschine nach Anspruch 5, dadurch gekennzeichnet, daß das koaxiale elastische Lager (20) eine längs der Achse der Führungsstange durchgehende elastische Muffe ist, deren zylindrische Außenfläche ohen Druckbelastung über die zu der Stange gehörende zylindrische Oberfläche hervorragt.

7. Maschine nach Anspruch 5, dadurch gekennzeichnet, daß das koaxiale elastische Lager (20) eine Vielzahl von längs der Achse (8) der Führungsstange gestaffelten, in radialer Richtung elastisch verformbaren elastischen Ringen (13) umfaßt, deren Außenfläche (13a) ohne Druckbeastung über die zu der Stange (11) gehörende zylindrische Oberfläche hervorragt.

8. Maschine nach Anspruch 7, dadurch gekennzeichnet, daß die Führungsstange (11) eine Vielzahl von ringförmigen Aufnahmen (11a) umfaßt, die längs der Achse (8) der Führungsstange gestaffelt sowie gegenüber der zylindrischen Oberfläche der letzteren hohl sind, und die die Vielzahl an elastischen Ringen (13) aufnehmen.

9. Maschine nach Anspruch 7, dadurch gekennzeichnet, daß das koaxiale elastische Lager (20) ein längs der Achse (8) der Führungsstange (11) durchgehendes ringförmiges Unterteil trägt, von dem die elastischen Ringe (13) einstückig hervorstehen.

10. Maschine nach Anspruch 7, dadurch gekennzeichnet, daß im Querschnitt ein elastischer Ring (13) zwei zwischen sich einen stumpfen Winkel ausbildende Schenkel (13b) umfaßt.

11. Maschine nach Anspruch 10, dadurch gekennzeichnet, daß im Querschnitt die beiden Schenkel (13b) des Ringes durch einen konkaven Mittenabschnitt (13c) voneinander getrennt sind.
